# FASCICULE DE BREVET EUROPEEN

(11) **EP 3 377 343 B1**
(45) Date de publication et mention de la délivrance du brevet: **12.02.2020**
(21) Numéro de dépôt: 16805302.3
(22) Date de dépôt: 09.11.2016
(51) Int. Cl.: B60H 1/00, B60H 1/22

(54) **PROCEDE ET SYSTEME DE CHAUFFAGE D'UN HABITACLE D'UN VEHICULE ELECTRIQUE**
VERFAHREN UND SYSTEM ZUM ERWÄRMEN EINES FAHRGASTRAUMES EINES ELEKTROFAHRZEUGS
METHOD AND SYSTEM FOR HEATING A PASSENGER COMPARTMENT OF AN ELECTRIC VEHICLE

(30) Priorité: 16.11.2015 FR 1560979
(43) Date de publication de la demande: 26.09.2018
(73) Titulaire: Bluebus, 29500 Ergue Gaberic (FR)
(72) Inventeur: DESNEUX, Alexandre, 69720 Saint Laurent de Mure (FR); DURAND, Fabien, 69150 Decines (FR); BARDOT, Christophe, 78180 Montigny-le-Bretonneux (FR)
(74) Mandataire: IPAZ
(86) Numéro de dépôt international: PCT/EP2016/077108
(87) Numéro de publication internationale: WO 2017/084935

(56) Documents cités:
- DE-A1-102012 019 624
- DE-A1-102013 001 749
- US-A- 5 067 652

## Description

La présente invention concerne un procédé de chauffage de l'habitacle d'un véhicule électrique, en particulier d'un véhicule électrique dont l'ensemble de l'énergie pour le mouvoir est fourni par une source d'énergie électrique embarquée rechargeable depuis une source extérieure. Elle concerne également un système mettant en œuvre un tel procédé et un véhicule électrique, en particulier de type bus, mettant en œuvre un tel procédé ou un tel système.

Le domaine de l'invention est le domaine des systèmes de chauffage d'un véhicule électrique, et en particulier d'un véhicule électrique dans lequel l'ensemble de l'énergie pour le mouvoir est fourni par une source d'énergie électrique embarquée rechargeables depuis une source extérieure.

### Etat de la technique

Un des moyens de transport en commun le plus prisé est le bus car sa mise en place ne nécessite pas d'infrastructure spécifique, de type voie ferrée par exemple. Pour diminuer la pollution liée aux transports en commun, les bus électriques font leur apparition encouragée à la fois par la prise de conscience des utilisateurs mais également par des mesures administratives incitatives favorisant l'achat et l'utilisation des véhicules électriques. On assiste également à l'apparition et au développement des tram-bus. Ainsi, le nombre de bus, électriques ou non, augmente sans cesse.

Pour les bus électriques alimentés par des batteries rechargeables depuis une source extérieure, par contraste avec les bus hybrides, l'autonomie est un point clef. Pour augmenter l'autonomie de ces bus, une chaudière à combustion est utilisée pour le chauffage de l'habitacle. Ainsi, l'énergie nécessaire au chauffage de l'habitacle n'est pas prélevée sur les batteries.

On connait des procédés de chauffage selon le préambule de la revendication 1, tels que ceux décrits dans le document DE 10 2012 019624 A1.

Or, la chaudière à combustion ne peut pas être utilisée tout le temps, par exemple lorsque le véhicule est au garage. De plus, une chaudière à combustion augmente la pollution générée par le véhicule électrique et la consommation en carburant dudit véhicule.

Un but de la présente invention est de remédier à ces inconvénients.

Un autre but de l'invention est de proposer un procédé et un système de chauffage de l'habitacle d'un véhicule électrique pouvant être utilisés, même lorsque le véhicule est à l'arrêt.

Il est aussi un but de l'invention de proposer un procédé et un système de chauffage de l'habitacle d'un véhicule électrique générant moins de pollution.

Encore un autre but de l'invention est de proposer un procédé et un système de chauffage de l'habitacle diminuant la consommation en carburant dudit véhicule électrique.

### Exposé de l'invention

L'invention permet d'atteindre au moins l'un de ces buts par un procédé de chauffage de l'habitacle d'un véhicule électrique selon la revendication 1.

Ainsi, le procédé selon l'invention propose de réaliser une phase de préchauffage du véhicule, avec une chaudière électrique, lorsque le véhicule est relié à une source électrique extérieure, telle que le secteur par exemple. Dans ce cas, la chaudière électrique est alimentée par la source électrique extérieure, directement ou par l'intermédiaire des batteries du véhicule. Une telle situation peut se produire lorsque le véhicule est à l'arrêt, pour le rechargement de ses batteries, ou lorsque le véhicule est dans une phase de garage en attente d'utilisation. Puis, lorsque le véhicule est débranché pour être utilisé, sur route par exemple, le chauffage du véhicule est assuré par une chaudière à combustion, de sorte que le chauffage ne consomme pas d'énergie électrique emmagasinée dans les batteries du véhicule électrique.

Par conséquent, grâce au procédé selon l'invention, l'habitacle d'un véhicule électrique peut être chauffé même lorsque le véhicule est à l'arrêt, et ce tout en diminuant la pollution générée par le véhicule électrique et la consommation en carburant dudit véhicule électrique.

Dans la présente demande, un « tram-bus » désigne un véhicule électrique terrestre de transport en commun monté sur roues et qui se recharge à chaque station, afin de ne pas nécessiter des infrastructures lourdes de type rails, caténaires, sur la voirie. Un tel véhicule électrique se recharge à chaque station au moyen d'éléments de charge de la station et d'un connecteur reliant ledit véhicule à ladite station.

Selon l'invention, l'étape de préchauffage, concerne uniquement une zone de conducteur du véhicule, telle que par exemple un poste de pilotage du véhicule.

Le procédé selon l'invention peut avantageusement comprendre une étape de déclenchement, en particulier à distance du véhicule, de l'étape de préchauffage.

Une telle étape de préchauffage peut être déclenchée par une minuterie intégrée au véhicule.

Alternativement, une telle étape de préchauffage peut être déclenchée par un appareil distant, par exemple un serveur distant ou un appareil utilisateur portable, au travers d'un réseau de communication sans fil ou filaire. Une telle étape de préchauffage peut également être déclenchée par une borne de rechargement électrique à laquelle le véhicule est relié.

La connexion entre le serveur et/ou la borne de rechargement peut être réalisée de manière filaire, par exemple grâce au fil pilote d'un câble de rechargement reliant ledit véhicule à ladite borne de rechargement. Alternativement, la connexion entre le serveur et/ou la borne de rechargement et/ou l'appareil utilisateur peut être réalisée de manière sans fil, par exemple au travers d'un réseau de communication sans fil, tel que le réseau utilisé pour la téléphonie mobile.

L'étape de préchauffage peut, alternativement ou en plus, être déclenchée automatiquement en fonction de l'un au moins des paramètres suivants :
- une heure prédéterminée,
- une durée prédéterminée avant la prise dudit véhicule, suite par exemple à une phase de repos/garage du véhicule,
- une température extérieure, et
- une température intérieure dans l'au moins une partie de l'habitacle.

Suivant un exemple de réalisation nullement limitatif, l'étape de préchauffage peut être déclenchée, lorsque le conducteur vient prendre le véhicule, par exemple le matin, par exemple 30 minutes avant l'heure de prise du véhicule.

Dans certains cas, l'étape de chauffage peut en outre être réalisée par la chaudière électrique, en plus de la chaudière à combustion.

Dans ce cas, la chaudière électrique vient amener un complément de chauffage de manière continue ou temporaire, par exemple lorsque la chaudière à combustion est insuffisante, en fonction de la température demandée dans l'habitacle.

Avantageusement, l'étape de préchauffage peut être réalisée sans démarrage du ou des moteurs électriques du véhicule électrique.

Autrement dit, l'utilisation de la chaudière électrique peut être complètement indépendante de l'utilisation du ou des moteurs électriques pour faire rouler le véhicule électrique.

L'étape de chauffage peut être déclenchée, de manière automatisée, lorsque :
- l'étape de préchauffage est arrêtée,
- le véhicule se met en mouvement,
- le véhicule est débranché d'une source électrique extérieure, et/ou
- la température à l'intérieur de l'au moins une partie de l'habitacle qui été préchauffée atteint une température prédéterminée ;
tout de suite ou éventuellement après une durée prédéterminée suite à l'un au moins de ces événements.

Le déclenchement de l'étape de chauffage peut en plus être conditionné à une confirmation manuelle de la part d'un opérateur ou d'un conducteur dudit véhicule.

Alternativement, l'étape de chauffage peut être déclenchée de manière manuelle, par exemple par un conducteur dudit véhicule.

L'étape de préchauffage peut être arrêtée, de manière automatisée, lorsque :
- l'étape de chauffage est déclenchée,
- le véhicule se met en mouvement,
- le véhicule est débranché d'une source électrique extérieure, et/ou
- la température à l'intérieur de l'au moins une partie de l'habitacle qui été préchauffée atteint une température prédéterminée ;
tout de suite ou éventuellement après une durée prédéterminée suite à l'un au moins de ces événements.

L'arrêt de l'étape de préchauffage peut en plus être conditionné à une confirmation manuelle de la part d'un opérateur ou d'un conducteur dudit véhicule.

Alternativement, l'étape de préchauffage peut être arrêtée de manière manuelle, par exemple par un conducteur dudit véhicule.

Avantageusement, l'étape de préchauffage et l'étape de chauffage peuvent être réalisées par transfert d'énergie thermique vers un fluide caloporteur.

Le fluide caloporteur pour l'étape de chauffage et l'étape de préchauffage peut être un même et unique fluide caloporteur.

Le fluide caloporteur peut être de l'eau.

Dans un mode de réalisation nullement limitatif, l'étape de préchauffage peut réaliser le préchauffage uniquement d'une zone passager, ou d'une zone conducteur, du véhicule.

Suivant un autre aspect de l'invention, il est proposé un système de chauffage de l'habitacle d'un véhicule électrique selon la revendication 10.

L'au moins une chaudière électrique, respectivement l'au moins une chaudière à combustion, peuvent réaliser le préchauffage, respectivement le chauffage, de l'habitacle par l'intermédiaire d'un fluide caloporteur, tel que de l'eau par exemple.

Dans ce cas, l'au moins une chaudière électrique et l'au moins une chaudière à combustion peuvent chauffer un même et unique fluide caloporteur.

Ainsi, le système de chauffage est simple à mettre en œuvre, plus efficace en termes de rendement et moins coûteux.

Suivant un mode de réalisation non limitatif, lorsque le chauffage de l'habitacle est réalisé par l'intermédiaire d'un fluide caloporteur, le système selon l'invention peut comprendre :
- un circuit pour faire circuler ledit fluide dans l'habitacle du véhicule, et
- au moins un échangeur thermique, en particulier eau-air, pour transférer la chaleur depuis ledit fluide caloporteur vers ledit habitacle, relié audit circuit.

Par ailleurs, dans une version préférée nullement limitative, particulièrement adaptée aux besoins d'un véhicule de transport en commun :
- la chaudière électrique peut présenter une puissance supérieure ou égale 5kW, et/ou
- la chaudière à combustion peut présenter une puissance supérieure ou égale à 15kW.

Suivant un autre aspect de la même invention, il est proposé un véhicule électrique comprenant :
- un système de chauffage selon l'invention ; ou
- des moyens pour mettre en œuvre toutes les étapes du procédé selon l'invention.

Le véhicule électrique selon l'invention peut en particulier être un véhicule électrique terrestre de transport en commun, en particulier sur rail ou sur route, par exemple de type bus, car ou tram-bus.

Le véhicule selon l'invention comprend un ou plusieurs modules de stockage d'énergie électrique rechargeable depuis une source externe, telle que le secteur.

Chaque module de stockage d'énergie électrique rechargeable peut comprendre une ou plusieurs batterie(s), ou supercapacité(s), rechargeables.

Pour ce faire, le véhicule est muni d'au moins une prise et/ou d'un câble de rechargement électrique. Un tel câble et/ou une telle prise peu(ven)t comprendre un fil pilote permettant de :
- communiquer avec le véhicule, et/ou
- détecter le branchement et/ou le débranchement dudit véhicule à une source électrique externe.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple non limitatif d'un véhicule électrique selon l'invention ;
- la FIGURE 2 est une représentation schématique d'un exemple non limitatif d'un procédé selon l'invention ;
- la FIGURE 3 est une représentation schématique d'un exemple non limitatif d'un système de chauffage selon l'invention ; et
- la FIGURE 4 est une représentation schématique partielle du véhicule de la FIGURE 1 avec le système de la FIGURE 3.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieur.

Sur les figures, les éléments communs à plusieurs figures conservent la même référence.

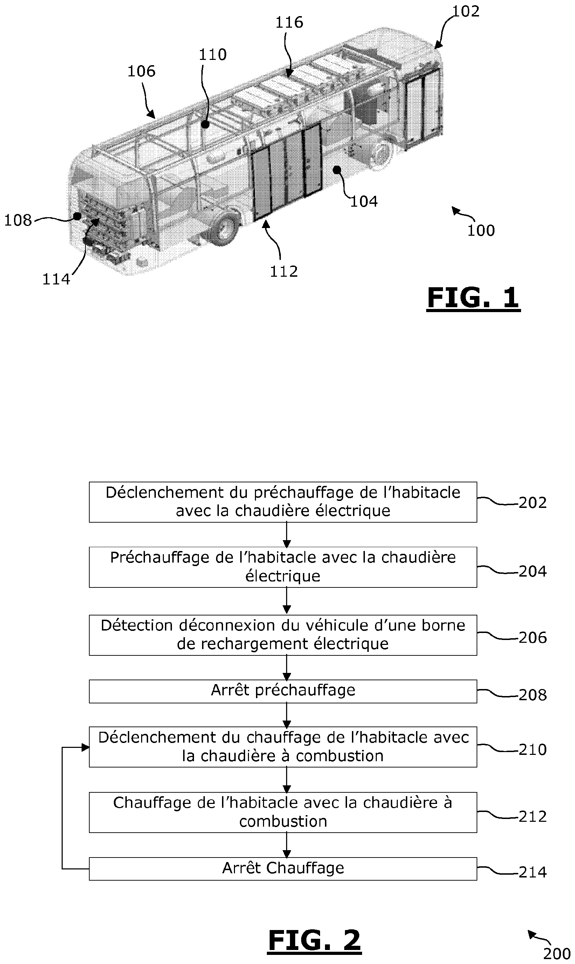

La FIGURE 1 est une représentation schématique d'un exemple non limitatif d'un véhicule électrique selon l'invention.

Le véhicule électrique 100 représenté sur la FIGURE 1 est un bus électrique comportant un habitacle délimité par une paroi avant 102, deux parois latérales longitudinales 104 et 106, une paroi arrière 108, une paroi supérieure 110 et une paroi inférieure 112.

Le bus électrique comporte un ou plusieurs moteurs électriques (non représentés), des modules 114, dits arrière, de stockage d'énergie électrique, disposés du côté de la paroi arrière 108. Le bus 100 comprend en outre des modules 116, dits supérieurs, de stockage d'énergie électrique, disposés dans un logement aménagé dans la paroi supérieure 110 du bus 100.

Le bus électrique 100 est mis en mouvement exclusivement par l'énergie électrique fournie par les modules de stockage d'énergie électriques 114 et 116, qui peuvent être des batteries ou des supercapacités.

Les modules de stockage d'énergie électrique 114 et 116 sont rechargés depuis une source électrique externe, par l'intermédiaire d'un câble de rechargement, comprenant éventuellement un fil pilote.

L'habitacle du bus électrique 100 est chauffé par un système de chauffage selon l'invention mettant en œuvre un procédé de chauffage selon l'invention.

La FIGURE 2 est une représentation schématique d'un exemple non limitatif d'un procédé selon l'invention.

Le procédé 200, représenté sur la FIGURE 2, comprend une étape 202 de déclenchement d'un préchauffage du poste de pilotage du bus 100 de la FIGURE 1. L'étape de préchauffage est réalisée par une chaudière électrique, alimentée par une source d'électricité externe au véhicule à laquelle ledit véhicule est branché, telle que par exemple le secteur, directement ou par l'intermédiaire d'une ou plusieurs batteries.

L'étape 202 de déclenchement comprend une mise en route de la chaudière électrique.

L'étape de déclenchement est réalisée de manière automatisée, par exemple par une minuterie intégrée au véhicule et commandant l'alimentation de la chaudière électrique.

Alternativement, le déclenchement de l'étape de préchauffage peut être réalisé par un serveur distant ou par une borne de rechargement. La connexion entre le serveur et/ou la borne de rechargement peut être réalisée de manière filaire, par exemple grâce au fil pilote d'un câble de rechargement reliant ledit véhicule à ladite borne de rechargement.

Alternativement, la connexion entre le serveur et/ou la borne de rechargement peut être réalisée de manière sans fil, par exemple au travers d'un réseau de communication sans fil, tel que le réseau de communication utilisé pour la téléphonie mobile.

Suivant un exemple de réalisation, l'étape de préchauffage est déclenchée 15 minutes avant l'heure de prise du véhicule en vue de son utilisation, après une étape de repos du véhicule.

Le déclenchement du préchauffage du véhicule peut être conditionné à une détection de branchement dudit véhicule sur une source électrique externe. Une telle détection de branchement peut être réalisée par l'intermédiaire d'un fil pilote du câble de rechargement, ou de la borne de rechargement, du véhicule électrique.

Une étape 204 réalise le préchauffage du poste de pilotage par la chaudière électrique. L'étape de préchauffage est réalisée jusqu'à atteindre une température prédéterminée, par exemple de 15°C, et tant que le véhicule électrique reste branché à la source électrique externe. En effet, la chaudière électrique est alimentée, au moins principalement, par la source électrique externe.

Le préchauffage est réalisé par chauffage, par la chaudière électrique, d'un fluide caloporteur, tel que de l'eau. La chaleur emmagasinée par le fluide est ensuite échangée avec l'air présent dans au moins une partie de l'habitacle, tel que le poste de conduite, grâce à un ou plusieurs échangeurs thermique eau-air, également appelé échangeur dans la présente demande.

Une étape 206 détecte le débranchement du véhicule de la source électrique externe. Une telle détection peut être réalisée, de manière automatisée, en utilisant le fil pilote du câble de rechargement, ou de la borne de rechargement, du véhicule électrique.

Suite à une détection de débranchement, une étape 208 réalise un arrêt du préchauffage par la chaudière électrique.

Suite à l'arrêt du préchauffage, une étape 210 réalise un déclenchement du chauffage, soit de la partie de l'habitacle qui a été préchauffée lors de l'étape 204, soit de la totalité de l'habitacle, avec une chaudière à combustion, par exemple une chaudière fonctionnant au biocarburant, lorsque la température dans l'habitacle est inférieure à une température souhaitée, par exemple 18°C. L'étape 210 de déclenchement de l'étape de chauffage peut être conditionnée à la réalisation d'au moins une condition additionnelle telle que la mise en mouvement du véhicule, ou une confirmation manuelle de la part du conducteur, ou l'absence de branchement du véhicule à une source électrique externe, etc.

Une étape 212 réalise alors le chauffage soit de la partie de l'habitacle qui a été préchauffée lors de l'étape 204, soit de la totalité de l'habitacle, avec la chaudière à combustion, et ce pour atteindre une température souhaitée pré-renseignée et tant que la ou les conditions additionnelles énoncées plus haut sont respectées.

Le chauffage est réalisé par chauffage, par la chaudière à combustion, du même fluide caloporteur que celui utilisé pour le préchauffage.

Lorsque la température souhaitée est atteinte, ou lorsqu'une des conditions additionnelle n'est pas respectée, ou encore sur demande du conducteur, une étape 214 arrête le chauffage.

Les étapes 210-214 sont ensuite réitérées aussi souvent que nécessaire pour maintenir une température souhaitée dans l'habitacle du véhicule électrique.

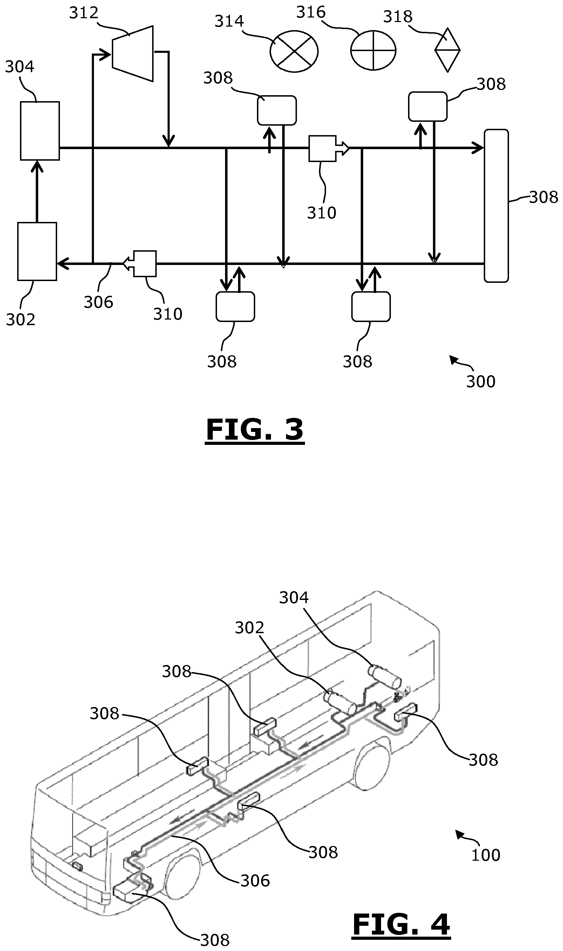

La FIGURE 3 est une représentation schématique d'un exemple non limitatif d'un système de chauffage selon l'invention.

Le système 300 représenté sur la FIGURE 3 comprend une chaudière électrique 302 disposée en série avec une chaudière à combustion 304, et en particulier au bio-carburant, sur un circuit de chauffage 306 dans lequel circule un fluide caloporteur, tel que de l'eau. Le système comprend en outre, relié au circuit de chauffage 306 :
- un ou plusieurs échangeurs thermiques 308, répartis dans l'habitacle du véhicule pour transférer la chaleur emmagasinée par le fluide caloporteur à l'air se trouvant à l'intérieur de l'habitacle ;
- une ou plusieurs pompes 310 pour faire circuler le fluide caloporteur dans le circuit de chauffage ;
- un vase d'expansion 312.

Le système 300 comprend en outre un moyen 314 de prise d'air neuf dans l'habitacle, un moyen 316 d'extraction d'air vicié hors de l'habitacle, ainsi qu'un thermomètre 318, ou équivalent, pour mesurer et communiquer la température.

Le système comprend en outre un module central (non représenté), tel qu'une carte électronique, un processeur ou équivalent, pour déclencher et arrêter la chaudière électrique et la chaudière à combustion en fonction des données indiquées plus haut.

La FIGURE 4 est une représentation schématique partielle du bus de la FIGURE 1 avec le système de la FIGURE 3.

Tel que représenté sur la FIGURE 4, le circuit caloporteur 306 parcourt la majeure partie du véhicule 100 dans le sens de la longueur, par exemple sensiblement dans une partie centrale du plancher du véhicule 100, de sorte qu'il est sensiblement agencé à égale distance des parois latérales du véhicule 100.

La chaudière électrique 302 et la chaudière à combustion 304 sont disposées en partie arrière du véhicule, sous le plancher du véhicule 100.

Un échangeur thermique 308, communément appelé HVAC, est disposé sous le poste de conduite à l'avant du véhicule. Les autres échangeurs thermiques 308 sont agencés dans les parois latérales, et plus particulièrement dans l'épaisseur des parois latérales, tout le long du véhicule.

Suivant un exemple de réalisation, la chaudière électrique 302 présente une puissance supérieure ou égale 5kW.

Suivant un exemple de réalisation, la chaudière à combustion 304 présente une puissance supérieure ou égale à 15kW.

Bien entendu, l'invention n'est pas limitée aux exemples qui viennent d'être décrits.

## Revendications

1. Procédé (200) de chauffage de l'habitacle d'un véhicule électrique (100) dans lequel l'ensemble de l'énergie pour le mouvoir est fourni par une source d'énergie électrique embarquée rechargeable depuis une source extérieure, ledit procédé comprenant les étapes suivantes :
- préchauffage (204) d'au moins une partie dudit habitacle par au moins une chaudière électrique (302), lorsque ledit véhicule (100) est relié à une source d'énergie extérieure, et
- chauffage (212) de ladite au moins une partie dudit habitacle par une chaudière à combustion (304), lors de l'utilisation dudit véhicule (100) ;
**caractérisé en ce que** l'étape de préchauffage (204) réalise le préchauffage uniquement d'une zone conducteur dudit véhicule (100) distincte d'une zone passager dudit véhicule (100).

2. Procédé (200) selon la revendication précédente, **caractérisé en ce qu'**il comprend une étape (202) de déclenchement, en particulier à distance du véhicule (100), de l'étape de préchauffage (204).

3. Procédé (200) selon l'une quelconque des revendications précédentes, **caractérisé en ce que** l'étape de chauffage (212) est en outre réalisée par la chaudière électrique (302) en plus de la chaudière à combustion.

4. Procédé (200) selon l'une quelconque des revendications précédentes, **caractérisé en ce que** l'étape de préchauffage (204) est réalisée sans démarrage du ou des moteurs électriques dudit véhicule électrique (100).

5. Procédé (200) selon l'une quelconque des revendications précédentes, **caractérisé en ce que** l'étape de préchauffage (204) est déclenchée automatiquement en fonction de l'un au moins des paramètres suivants :
- une heure prédéterminée,
- une durée prédéterminée avant la prise dudit véhicule, suite par exemple à une phase de repos/garage du véhicule,
- une température extérieure, et
- une température intérieure dans l'au moins une partie de l'habitacle.

6. Procédé (200) selon l'une quelconque des revendications précédentes, **caractérisé en ce que** l'étape de chauffage (212) est déclenchée, de manière automatisée, lorsque :
- l'étape de préchauffage (204) est arrêtée,
- le véhicule (100) se met en mouvement,
- le véhicule (100) est débranché d'une source électrique extérieure, et/ou
- la température à l'intérieur de l'au moins une partie de l'habitacle qui a été préchauffée atteint une température prédéterminée.
tout de suite ou éventuellement après une durée prédéterminée suite à l'un au moins de ces événements.

7. Procédé (200) selon l'une quelconque des revendications précédentes, **caractérisé en ce que** l'étape de préchauffage (204) est arrêtée, de manière automatisée, lorsque:
- l'étape de chauffage (212) est déclenchée,
- le véhicule (100) se met en mouvement,
- le véhicule (10) est débranché d'une source électrique extérieure, et/ou
- la température à l'intérieur de l'au moins une partie de l'habitacle qui été préchauffée atteint une température prédéterminée.
tout de suite ou éventuellement après une durée prédéterminée suite à l'un au moins de ces événements.

8. Procédé (200) selon l'une quelconque des revendications précédentes, **caractérisé en ce que** le déclenchement de l'étape de chauffage (212), respectivement l'arrêt de l'étape de préchauffage (204), est conditionné à une confirmation manuelle de la part d'un opérateur ou d'un conducteur du véhicule.

9. Procédé (200) selon l'une quelconque des revendications précédentes, **caractérisé en ce que** l'étape de préchauffage (204) et l'étape de chauffage (212) sont réalisées par transfert d'énergie thermique vers un même fluide caloporteur.

10. Système (300) de chauffage de l'habitacle d'un véhicule électrique (100), dans lequel l'ensemble de l'énergie pour le mouvoir est fourni par une source d'énergie électrique embarquée rechargeable depuis une source extérieure, ledit système comprenant :
- au moins une chaudière électrique (302) configurée pour réaliser un préchauffage d'au moins une partie dudit habitacle, lorsque ledit véhicule (100) est relié à une source d'énergie extérieure, et
- au moins une chaudière à combustion (304), pour le chauffage de ladite au moins une partie dudit habitacle, lors de l'utilisation dudit véhicule.
**caractérisé en ce que** la chaudière électrique (302) est configuré pour réaliser un préchauffage réalise le préchauffage uniquement d'une zone conducteur dudit véhicule (100) distincte d'une zone passager dudit véhicule (100).

11. Système (300) selon la revendication précédente, **caractérisé en ce que** le chauffage de l'habitacle est réalisé par l'intermédiaire d'un unique fluide caloporteur et l'au moins une chaudière électrique (302) et/ou l'au moins une chaudière à combustion (304) chauffent ledit unique fluide caloporteur.

12. Système (300) selon l'une quelconque des revendications 10 ou 11, **caractérisé en ce que** le chauffage de l'habitacle est réalisé par l'intermédiaire d'un fluide caloporteur, ledit système (300) comprenant :
- un circuit (306) pour faire circuler ledit fluide dans l'habitacle du véhicule, et
- au moins un échangeur thermique (308) pour transférer la chaleur depuis ledit fluide caloporteur vers ledit habitacle, relié audit circuit (306).

13. Système (300) selon l'une quelconque des revendications 10 à 12, **caractérisé en ce que** :
- la chaudière électrique présente une puissance supérieure ou égale 5kW, et/ou
- la chaudière à combustion présente une puissance supérieure ou égale à 15kW.

14. Véhicule électrique (100) comprenant :
- un système (300) de chauffage selon l'une quelconque des revendications 10 à 13 ; ou
- des moyens pour mettre en œuvre toutes les étapes du procédé (200) selon l'une quelconque des revendications 1 à 9.

15. Véhicule électrique (100) selon la revendication précédente, **caractérisé en ce qu'**il s'agit d'un véhicule électrique terrestre de transport en commun.

16. Véhicule électrique (100) selon l'une quelconque des revendications 14 ou 15, **caractérisé en ce qu'**il s'agit d'un bus, d'un car ou d'un tram-bus.

## Patentansprüche

1. Verfahren (200) zum Beheizen des Innenraums eines Elektrofahrzeugs (100), bei welchem die gesamte Energie zu dessen Bewegung von einer elektrischen Energiequelle geliefert wird, welche eingebaut und von einer Außenquelle aus wieder aufladbar ist, wobei das Verfahren folgende Schritte umfasst:
- Vorheizen (204) mindestens eines Teils des Innenraums durch mindestens einen Elektrokessel (302), wenn das Fahrzeug (100) mit einer Außenenergiequelle verbunden ist, und
- Beheizen (212) des mindestens einen Teils des Innenraums durch einen Verbrennungskessel (304) bei Benutzung des Fahrzeugs (100);
**dadurch gekennzeichnet, dass** der Schritt des Vorheizens (204) ausschließlich das Vorheizen eines Führerbereichs des Fahrzeugs (100) ausführt, welcher sich von einem Passagierbereich des Fahrzeugs (100) unterscheidet.

2. Verfahren (200) nach dem vorhergehenden Anspruch, **dadurch gekennzeichnet, dass** es einen Schritt (202) zur Auslösung des Schritts des Vorheizens (204), insbesondere vom Fahrzeug entfernt (100), umfasst.

3. Verfahren (200) nach einem der vorhergehenden Ansprüche, **dadurch gekennzeichnet, dass** der Schritt des Beheizens (212) außerdem durch den elektrischen Kessel (302) zusätzlich zum Verbrennungskessel ausgeführt wird.

4. Verfahren (200) nach einem der vorhergehenden Ansprüche, **dadurch gekennzeichnet, dass** der Schritt des Vorheizens (204) ohne Starten des oder der elektrischen Motoren des Elektrofahrzeugs (100) ausgeführt wird.

5. Verfahren (200) nach einem der vorhergehenden Ansprüche, **dadurch gekennzeichnet, dass** der Schritt des Vorheizens (204) automatisch in Abhängigkeit von mindestens einem der folgenden Parameter ausgelöst wird:
- einer vorbestimmten Uhrzeit,
- einer vorbestimmten Dauer vor Annahme des Fahrzeugs, zum Beispiel nach einer Ruhe-/Parkphase des Fahrzeugs,
- einer Außentemperatur, und
- einer Innentemperatur in dem wenigstens einen Teil des Innenraums.

6. Verfahren (200) nach einem der vorhergehenden Ansprüche, **dadurch gekennzeichnet, dass** der Schritt des Beheizens (212) automatisiert ausgelöst wird, wenn:
- der Schritt des Vorheizens (204) beendet wird,
- das Fahrzeug (100) beginnt, sich zu bewegen,
- das Fahrzeug (100) von einer elektrischen Außenquelle getrennt ist, und/oder
- die Temperatur innerhalb des wenigstens einen Teils des Innenraums, welcher vorgeheizt wurde, eine vorbestimmte Temperatur erreicht,
unmittelbar oder eventuell nach einer vorbestimmten Dauer nach mindestens einem dieser Ereignisse.

7. Verfahren (200) nach einem der vorhergehenden Ansprüche, **dadurch gekennzeichnet, dass** der Schritt des Vorheizens (204) automatisiert beendet wird, wenn:
- der Schritt des Beheizens (212) ausgelöst wird,
- das Fahrzeug (100) beginnt, sich zu bewegen,
- das Fahrzeug (10) von einer elektrischen Außenquelle getrennt ist, und/oder
- die Temperatur innerhalb des wenigstens einen Teils des Innenraums, welcher vorgeheizt wurde, eine vorbestimmte Temperatur erreicht,
unmittelbar oder eventuell nach einer vorbestimmten Dauer nach mindestens einem dieser Ereignisse.

8. Verfahren (200) nach einem der vorhergehenden Ansprüche, **dadurch gekennzeichnet, dass** das Auslösen des Schritts des Beheizens (212) beziehungsweise der Beendigung des Schritts des Vorheizens (204) von einer manuellen Bestätigung seitens eines Bedieners oder eines Fahrers des Fahrzeugs abhängt.

9. Verfahren (200) nach einem der vorhergehenden Ansprüche, **dadurch gekennzeichnet, dass** der Schritt des Vorheizens (204) und der Schritt des Beheizens (212) durch Wärmeenergieübertragung an ein gleiches Wärmeträgerfluid erfolgen.

10. System (300) zum Beheizen des Innenraums eines Elektrofahrzeugs (100), bei welchem die gesamte Energie zu dessen Bewegung von einer elektrischen Energiequelle geliefert wird, welche eingebaut und von einer Außenquelle aus wieder aufladbar ist, wobei das System umfasst:
- mindestens einen Elektrokessel (302), welcher dazu eingerichtet ist, mindestens einen Teil des Innenraums vorzuheizen, wenn das Fahrzeug (100) mit einer Außenenergiequelle verbunden ist, und
- mindestens einen Verbrennungskessel (304) zum Beheizen des mindestens einen Teils des Innenraums bei Benutzung des Fahrzeugs,
**dadurch gekennzeichnet, dass** der Elektrokessel (302), welcher dazu eingerichtet ist, ein Vorheizen auszuführen, das Vorheizen ausschließlich eines Führerbereichs des Fahrzeugs (100) ausführt, welcher sich von einem Passagierbereich des Fahrzeugs (100) unterscheidet.

11. System (300) nach dem vorhergehenden Anspruch, **dadurch gekennzeichnet, dass** das Beheizen des Innenraums über ein einziges Wärmeträgerfluid erfolgt und der wenigstens eine Elektrokessel (302) und/oder der wenigstens eine Verbrennungskessel (304) das einzige Wärmeträgerfluid aufheizen.

12. System (300) nach einem der Ansprüche 10 oder 11, **dadurch gekennzeichnet, dass** das Beheizen des Innenraums über ein Wärmeträgerfluid erfolgt, wobei das System (300) umfasst:
- ein Leitungssystem (306), um das Fluid in dem Innenraum des Fahrzeugs zirkulieren zu lassen, und
- mindestens einen Wärmetauscher (308) zur Übertragung der Wärme vom Wärmeträgerfluid zum Innenraum, mit dem Leitungssystem (306) verbunden.

13. System (300) nach einem der Ansprüche 10 bis 12, **dadurch gekennzeichnet, dass**:
- der Elektrokessel eine Leistung größer oder gleich 5kW aufweist, und/oder
- der Verbrennungskessel eine Leistung größer oder gleich 15kW aufweist.

14. Elektrofahrzeug (100), umfassend:
- ein Heizsystem (300) nach einem der Ansprüche 10 bis 13; oder
- Mittel zur Umsetzung aller Schritte des Verfahrens (200) nach einem der Ansprüche 1 bis 9.

15. Elektrofahrzeug (100) nach dem vorhergehenden Anspruch, **dadurch gekennzeichnet, dass** es sich um ein Landelektrofahrzeug für den öffentlichen Verkehr handelt.

16. Elektrofahrzeug (100) nach einem der Ansprüche 14 oder 15, **dadurch gekennzeichnet, dass** es sich um einen Bus, einen Reisebus oder einen Straßenbahn-Bus handelt.

## Claims

1. A method (200) for heating the passenger compartment of an electric vehicle (100) in which all of the energy for the movement thereof is provided by an on board electrical energy source that can be recharged from an external source, said method comprising the following steps:
- pre-heating (204) at least one part of said passenger compartment by at least one electric heater (302) when said vehicle (100) is connected to an external energy source, and
- heating (212) said at least one part of said passenger compartment by a combustion heater (304) when said vehicle (100) is in use;
**characterized in that** the pre-heating step (204) carries out pre-heating only of a driver's area of said vehicle (100) distinct from a passenger area of said vehicle (100).

2. The method (200) according to the preceding claim, **characterized in that** it comprises a step (202) of initiating, in particular remotely from the vehicle (100), the pre-heating step (204).

3. The method (200) according to any one of the preceding claims, **characterized in that** the heating step (212) is also carried out by the electric heater (302) in addition to the combustion heater.

4. The method (200) according to any one of the preceding claims, **characterized in that** the pre-heating step (204) is carried out without starting the one or more electric motors of said electric vehicle (100).

5. The method (200) according to any one of the preceding claims, **characterized in that** the pre-heating step (204) is automatically initiated as a function of at least one of the following parameters:
- a predetermined time,
- a predetermined period before said vehicle is collected, for example following an inactive/garaged phase of the vehicle,
- an external temperature, and
- an internal temperature in the at least one part of the passenger compartment.

6. The method (200) according to any one of the preceding claims, **characterized in that** the heating step (212) is automatically initiated when:
- the pre-heating step (204) is stopped,
- the vehicle (100) begins to move,
- the vehicle (100) is disconnected from an external energy source, and/or
- the temperature inside the at least one part of the passenger compartment which was pre-heated reaches a predetermined temperature;
immediately or optionally after a predetermined period following at least one of these events.

7. The method (200) according to any one of the preceding claims, **characterized in that** the pre-heating step (204) is automatically stopped when:
- the heating step (212) is initiated,
- the vehicle (100) begins to move,
- the vehicle (100) is disconnected from an external electrical source, and/or
- the temperature inside the at least one part of the passenger compartment which was pre-heated reaches a predetermined temperature;
immediately or optionally after a predetermined period following at least one of these events.

8. The method (200) according to any one of the preceding claims, **characterized in that** initiating the heating step (212), respectively stopping the pre-heating step (204), is conditional on manual confirmation by an operator or a driver of the vehicle.

9. The method (200) according to any one of the preceding claims, **characterized in that** the pre-heating step (204) and the heating step (212) are carried out by thermal energy transfer to a same heat transfer fluid.

10. A system (300) for heating the passenger compartment of an electric vehicle (100), in which all of the energy for the movement thereof is provided by an on board electrical energy source that can be recharged from an external source, said system comprising:
- at least one electric heater (302) configured in order to carry out pre-heating of at least one part or said passenger compartment when said vehicle (100) is connected to an external energy source, and
- at least one combustion heater (304) for heating said at least one part of said passenger compartment when said vehicle is in use;
**characterized in that** the electric heater (302) is configured in order to carry out pre-heating only in a driver's area of said vehicle (100) distinct from a passenger area of said vehicle (100).

11. The system (300) according to the preceding claim, **characterized in that** heating of the passenger compartment is carried out via a single heat transfer fluid and the at least one electric heater (302) and/or the at least one combustion heater (304) heat said single heat transfer fluid.

12. The system (300) according to any one of claims 10 or 11, **characterized in that** heating of the passenger compartment is carried out via a heat transfer fluid, said system (300) comprising:
- a circuit (306) for circulating said fluid in the passenger compartment of the vehicle, and
- at least one heat exchanger (308) for transferring the heat from said heat transfer fluid to said passenger compartment connected to said circuit (306).

13. The system (300) according to any one of claims 10 to 12, **characterized in that**:
- the electric heater has a power greater than or equal to 5kW, and/or
- the combustion heater has a power greater than or equal to 15kW.

14. An electric vehicle (100) comprising:
- a heating system (300) according to any one of claims 10 to 13; or
- means for implementing all the steps of the method (200) according to any one of claims 1 to 9.

15. The electric vehicle (100) according to the preceding claim, **characterized in that** it is an electric public transport land vehicle.

16. The electric vehicle (100) according to any one of claims 14 or 15, **characterized in that** it is a bus, a coach or a tyred tram.
